(19) Europäisches Patentamt
European Patent Office
Office européen des brevets

(11) **EP 2 160 368 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.02.2017 Patentblatt 2017/08**

(45) Hinweis auf die Patenterteilung:
**14.11.2012 Patentblatt 2012/46**

(21) Anmeldenummer: **08760297.5**

(22) Anmeldetag: **30.05.2008**

(51) Int Cl.:
*C04B 20/10* (2006.01)    *C04B 24/26* (2006.01)
*C04B 28/02* (2006.01)

(86) Internationale Anmeldenummer:
**PCT/EP2008/056710**

(87) Internationale Veröffentlichungsnummer:
**WO 2008/145738 (04.12.2008 Gazette 2008/49)**

(54) **VERWENDUNG VON ISOALKANGEMISCHEN ZUR ENTSTAUBUNG BAUCHEMISCHER PRODUKTE**

USE OF ISOALKANE MIXTURES FOR REDUCING DUSTING OF BUILDING CHEMICAL PRODUCTS

UTILISATION DE MÉLANGES D'ISOALCANES POUR LE DÉPOUSSIÉRAGE DE PRODUITS CHIMIQUES DE CONSTRUCTION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.05.2007 EP 07109344**

(43) Veröffentlichungstag der Anmeldung:
**10.03.2010 Patentblatt 2010/10**

(73) Patentinhaber: **BASF SE**
**67056 Ludwigshafen am Rhein (DE)**

(72) Erfinder:
• **LANGE, Arno**
**67098 Bad Dürkheim (DE)**
• **SEIP, Klaus**
**67071 Ludwigshafen (DE)**
• **DIETRICH, Ulf**
**67591 Wachenheim (DE)**
• **PAPP, Rainer**
**67346 Speyer (DE)**

(56) Entgegenhaltungen:
EP-A1- 1 783 105          WO-A-00/34200
WO-A-2006/084588      DE-A1-102004 018 753
DE-A1-102004 018 753  DE-U1-202006 016 797
US-A- 4 780 143            US-A- 4 909 847

• **ROBERTS J.D. ET AL: 'Chimie Organique Moderne', 1977, EDISCIENCE, PARIS**
• **'¹H-NMR-Based Protokoll for the Detection of Adulterations of Refined Olive Oil with Refined Hazelnut Oil' JOURNAL OF AGRICULTURAL AND FOOD CHEMISTRY 13 November 2009,**

**Beschreibung**

Die vorliegende Erfindung betrifft die Verwendung von Isoalkangemischen zur Reduzierung bzw. Minimierung der Staubemission beim Umgang mit pulverförmigen bauchemischen Produkten, ein Verfahren zur Herstellung der pulverförmigen bauchemischen Produkte, sowie hydraulisch abbindende Massen, enthaltend die erfindungsgemäßen Isoalkangemische.

Kohlenwasserstoffgemische, die kurzkettigen Olefine, z. B. mit 2 bis 6 Kohlenstoffatomen enthalten, sind im großtechnischen Maßstab erhältlich. So fällt z. B. bei der Aufarbeitung von Erdöl durch Steamcracken oder Fluidized Catalyst Cracking (FCC) ein als $C_4$-Schnitt bezeichnetes Kohlenwasserstoffgemisch mit einem hohen Gesamtolefingehalt an, wobei es sich im wesentlichen um Olefine mit 4 Kohlenstoffatomen handelt. Solche $C_4$-Schnitte, d. h. Gemische aus isomeren Butenen und Butanen, eignen sich, gegebenenfalls nach einer vorherigen Abtrennung des Isobutens und Hydrierung des enthaltenen Butadiens, sehr gut zur Herstellung von Oligomeren, insbesondere von Octenen und Dodecenen.

Eine große Bedeutung haben die aus Olefingemischen mit überwiegend linearen Ausgangsolefinen erhältlichen im Wesentlichen linearen Oligomerengemische erlangt. Sie eignen sich z. B. als Dieselkraftstoffkomponente sowie als Zwischenprodukte zur Herstellung funktionalisierter, überwiegend linearer Kohlenwasserstoffe. So erhält man durch Hydroformylierung und anschließende Hydrierung der Olefinoligomere die entsprechenden Alkohole, die unter anderem als Ausgangsstoffe für Detergenzien und als Weichmacher verwendet werden. Für viele Einsatzbereiche, z. B. als Weichmacheralkohole, spielt der Verzweigungsgrad der Olefine eine entscheidende Rolle. Der Verzweigungsgrad wird dabei beispielsweise durch den ISO-Index beschrieben, der die mittlere Zahl der Methylverzweigungen der jeweiligen Olefinfraktion angibt. So tragen z. B. bei einer $C_8$-Fraktion die n-Octene mit 0, Methylheptene mit 1 und Dimethylhexene mit 2 zum ISO-Index der Fraktion bei. Je niedriger der ISO-Index ist, umso größer ist die Linearität der Moleküle in der jeweiligen Fraktion.

Es ist bekannt, zur Herstellung wenig verzweiger, ebenfalls olefinisch ungesättigter Oligomere aus niederen Olefinen Katalysatoren einzusetzen, die als aktive Komponente Metalle und ganz überwiegend Nickel enthalten. Heterogene Katalysatoren weisen dabei gegenüber homogenen den Vorteil auf, dass eine Abtrennung des Katalysators vom Reaktoraustrag entfällt. So ist z. B. aus der DE-A 43 39 713 (= WO 95/14647) ist ein Verfahren zum Oligomerisieren von unverzweigten $C_2$- bis $C_6$-Olefinen an einem Festbettkatalysator bei erhöhtem Druck und erhöhter Temperatur bekannt, wobei der Katalysator als wesentliche aktive Bestandteile 10 bis 70 Gew.-% Nickeloxid, 5 bis 30 Gew.-% Titandioxid und/oder Zirkondioxid, 0 bis 20 Gew.-% Aluminiumoxid und als Rest Siliciumoxid enthält. Weitere Oligomerisierungskatalysatoren und -verfahren sind z. B. in der WO 99/25668, WO 00/59849, WO 00/53546, WO 01/72670 und EP-A 1 457 475 beschrieben.

Trockene, insbesondere pulverförmige bauchemische Produkte, wie hydraulisch abbindende oder zementbasierte Massen (z. B. Fliesenkleber, Fugenfüller, Spachtelmassen, Dichtschlämme, etc.) führen bei Umfüll- und Mischprozessen zu einer deutlichen Staubbildung. Deshalb wurden zahlreiche Versuche unternommen, um die Staubentwicklung in solchen Produkten zu vermindern bzw. zu unterbinden.

Es wurde beispielsweise versucht, die Staubentwicklung bei hydraulisch abbindenden Massen, beispielsweise Spachtelmassen über den Mahlgrad bzw. die Kornzusammensetzung der pulverförmigen Produkte zu verringern, wobei jedoch die Verarbeitbarkeit gröberer Pulver schlechter ist.

Eine weitere Methode zur Reduzierung der Staubentwicklung ist die Aggregation z. B. mit Wasser, wässrigen Lösungen oder Dispersionen. So ist beispielsweise aus der US 4,780,143 bekannt, Klinker vor der Vermahlung zu Zement zur Verringerung der Staubentwicklung mit wässrigem Schaum zu versetzen. Auch sind bereits Zusätze von Kunststoffdispersionen zu Zement für Spritzbetonzusammensetzungen vorgeschlagen worden, um die Staubbildung zu erniedrigen. Eine vorrübergehende Aggregation bei hydraulisch abbindenden Massen ist nur dann ohne Bedeutung, wenn die Produkte nachträglich vermahlen werden oder z. B. als Spritzbeton oder Spritzmörtel eingesetzt werden sollen. In feinpulvrigen Spachtelmassen beispielsweise, auf die nach dem Auftragen Fußbodenbeläge verlegt werden sollen, sind jedoch gröbere Aggregationen nicht annehmbar, da sie sich auf der Oberfläche vieler glatter Fußbodenbelagmaterialien abzeichnen.

In der EP 403 874 werden als Additive zur Staubminderung spezielle Ethylenoxid/Propylenoxid-Blockcopolymere genannt. Nachteilig an diesen Additiven ist jedoch, dass zur Erzielung eines signifikanten Effektes oftmals große Mengen hiervon eingesetzt werden müssen.

Die WO 2006/084588 offenbart die Verwendung von hochviskosen, linearen Kohlenwasserstoffen oder Kohlenwasserstoffgemischen als Additive zur Verminderung des Staubens pulverförmiger bauchemischer Produkte. Nachteilig an den dort beschriebenen Systemen ist jedoch die hohe Viskosität der eingesetzten Kohlenwasserstoffe, die auch einen hohen Verbrauch und damit geringe Effizienz der eingesetzten Additive bedingt.

Nachteilig ist bei diesen Verfahren oft auch der technisch komplizierte und kommerziell aufwendige Vorgang der Entstaubung. Meist muß das Entstaubungsmittel in einem separaten Prozessschritt mit speziell geformten Lanzen eingedüst werden, um die Entstaubung sicher zu stellen und gleichzeitig die Bildung von Klumpen zu verhindern.

Die DE 10 2004 018 753 A1 beschreibt ein Verfahren zur Herstellung eines $C_{16}$-Alkangemischs, bei dem ein Buten-haltiger $C_4$-Kohlenwasserstoffstrom in Gegenwart eines Nickel-haltigen Katalysators oligomerisiert wird, dann die $C_{16}$-Olefinfraktion abgetrennt und die abgetrennte $C_{16}$-Fraktion hydriert wird. Beschrieben sind weiterhin $C_{16}$-Alkangemische, die einen Anteil von $C_{16}$-Alkanen von ≥ 95 Massen-% aufweisen und deren Verwendung. Dabei werden allgemeine Hinweise zum Einsatz solcher Mittel in der Kosmetik, als Lösungsmittel oder in der Metallindustrie gegeben. Hinweise zur Verwendung solcher Mittel in der Bauchemie oder zur Entstaubung fehlen gänzlich.

Der vorliegenden Erfindung lag damit die Aufgabe zu Grunde, Additive zur Reduzierung der Staubminderung zur Verfügung zu stellen, die sich in vorteilhafter Weise als Entstaubungsmittel für pulverförmige bauchemische Produkte eignen und sich durch eine einfache Applikation und hohe Wirksamkeit auszeichnen. Darüberhinaus sollten sie bei der Anwendung nicht zur Klumpenbildung und nicht zu einer verminderten Festigkeit der ausgehärteten Systeme führen.

Erfindungsgemäß gelöst wurde die Aufgabe durch die Verwendung von Additiven enthaltend ein Isoalkangemisch, dessen $^1$H-NMR-Spektrum im Bereich einer chemischen Verschiebung δ von 0,6 bis 1,0 ppm, bezogen auf Tetramethylsilan, ein Flächenintegral von 25 bis 70 %, bezogen auf die Gesamtintegralfläche, aufweist, und die eine kinematische Viskosität, bestimmt bei 40°C nach DIN51562, von 1 bis 9 mm$^2$/sec aufweisen, wobei die Isoalkangemische, bezogen auf ihr Gesamtgewicht, weniger als 95 Gew.-% Alkane desselben Molekulargewichts enthalten.

Die vorliegende Erfindung betrifft die in den Ansprüchen dargelegten Gegenstände. Sie betrifft somit die Verwendung der erfindungsgemäßen Isoalkangemische als Additive zur Reduzierung bzw. Minimierung der Staubemission beim Umgang mit pulverförmigen bauchemischen Produkten, mit organischen und/oder mineralischen Bestandteilen, ein Verfahren zur Herstellung der pulverförmigen bauchemischen Produkte, sowie pulverförmige bauchemische Produkte, enthaltend die erfindungsgemäßen Isoalkangemische. Die Erfindung betrifft keine der hier beschriebenen Gegenstände, die von den Ansprüchen nicht erfasst werden.

Die pulverförmigen bauchemischen Produkte enthalten organische und/oder mineralische Bestandteile.

Pulverförmige bauchemische Produkte aus organischen und/oder mineralischen Bestandteilen können beispielsweise Fliesenkleber, Dichtungsschlämme, Armierungskleber, WDVS-Kleber, mineralische Putze, Reparaturmörtel, selbstverlaufende Spachtelmassen, Feinspachtel, Estrichsysteme, Dickbettmörtel, Fugenmörtel oder Oberflächenschutzsysteme sein.

Unter den organischen Bestandteilen der bauchemischen Produkte versteht man beispielsweise redispergierbare Polymerpulver, Verdicker, Stabilisierer, Entschäumer, Dispergiermittel, Emulgatoren oder Pigmente.

Die mineralischen Bestandteile können beispielsweise Zement, Gips, Kalk, Kreide, Sand, Quarzmehl, Ton, Asche, Schlacke, Microsilica, Leichtfüllstoffe wie Blähglas, Blähton, Poraven®, Expancell® sowie Pigmente sein.

Ein weiterer Gegenstand der Erfindung betrifft die Verwendung der erfindungsgemäβen Isoalkangemische als Additive zur Entstaubung pulverförmiger Polymere bzw. Polymerpulver sowie redispergierbarer Polymerpulver wie nachstehend aufgeführt:

| Redispergierbare Polymerpulver | Polymere | Polymerpulver |
|---|---|---|
| VAc/E/Veova | Stärken | PVC (Polyvinylchlorid) |
| S/Acrylat | Cellulosen | Phenolharzbinder |
| S/B | Gumme | Vinurane |
| UF/MF | | Kauritharze |
| Reinacrylate | | |
| VAc = Vinylacetat<br>S = Styrol<br>B = Butadien<br>E = Ethylen<br>Veova = Vinylester der Versatinsäure<br>UF = Ureaformaldehyd<br>MF = Melaminformaldehyd | | |

Durch den hohen Spreiting Effekt kann das erfindungsgemäße Entstaubungsmittel auf verschiedene Trägermaterialien aufgebracht werden und dann als Entstaubungspulver in Formulierungen verwendet werden.

Als Trägermaterialien kommen sowohl hydraulisch wirkende Stoffe (z. B. Zement, Gips, Dispersionspulver etc.), Füllstoffe (z. B. Sand, Steinmehl, Leichtfüllstoffe, Kalk etc.) als auch Additive (z. B. nicht hydrophobierte Kieselsäure, Zellulosen) in Betracht. Diese werden zum einen selbst entstaubt, zum anderen dienen sie bei Überdosierung an Entstaubungsmittel als Trägermaterial. Diese Kombination kann dann als Entstaubungspulver in bauchemischen Formulierungen (siehe S. 23 ff) eingesetzt werden. Der Formulierer benötigt damit keinen zusätzlichen Anlagenaufwand zur Entstaubung seiner Produkte.

Bereits kleine Mengen < 0,5 % an Entstaubungsmittel könnten ggf. dazu führen, dass die Ex-Einstufung der Produktions-, sowie Verarbeitungsanlagen reduziert werden kann. Damit können ggf. die Anlagen wesentlich kostengünstiger ausgerüstet werden (z. B. keine Ex-Motoren, Ex-Messgeräte etc.) Die Anlagensicherheit kann damit deutlich steigen.

Die erfindungsgemäßen Isoalkangemische, weisen ein $^{1}$H-NMR-Spektrum im Bereich einer chemischen Verschiebung $\delta$ von 0,6 bis 1,0 ppm, bezogen auf Tetramethylsilan, ein Flächenintegral von 25 bis 70 %, bezogen auf die Gesamtintegralfläche, auf.

Bevorzugt sind Isoalkangemische, deren $^{1}$H-NMR-Spektrum im Bereich einer chemischen Verschiebung $\delta$ von 0,6 bis 1,0 ppm ein Flächenintegral von 30 bis 60 %, bevorzugt von 35 bis 55 %, bezogen auf die Gesamtintegralfläche, aufweist.

Bevorzugt weisen die erfindungsgemäßen Isoalkangemische keine olefinischen Doppelbindungen auf. Geeignete Isoalkangemische weisen im $^{1}$H-NMR-Spektrum im Bereich einer chemischen Verschiebung $\delta$ von 4 bis 6 ppm nur wenig Signale auf, die auf Olefinprotonen zurückgehen; das Integral dieser Signal macht weniger als 0,5%, bevorzugt weniger als 0,2% des Gesamtintegrals aus.

Des Weiteren bevorzugt weist das Isoalkangemisch im $^{1}$H-NMR-Spektrum im Bereich einer chemischen Verschiebung $\delta$ von 0,5 bis 3 ppm (d. h. im Bereich der aliphatischen Protonen) ein Flächenintegral von bis zu 95 %, besonders bevorzugt von bis zu 98 %, bezogen auf die Gesamtintegralfläche, auf.

Die erfindungsgemäßen Isoalkangemische weisen im Wesentlichen keine tert.-Butyl-gruppen (-C(CH$_3$)$_3$) auf. Der Anteil an endständigen tert.-Butylgruppen beträgt vorzugsweise höchstens 20 %, besonders bevorzugt höchstens 10 %, insbesondere höchstens 5 % und speziell höchstens 2 %.

Vorzugsweise sind die erfindungsgemäßen Isoalkane einheitlich aufgebaut. So weisen sie, bezogen auf die längste durchgängige Kohlenstoffkette, im Wesentlichen oder ausschließlich Methylverzweigungen auf. Der Anteil an Seitenketten mit Alkylgruppen, die 2 oder mehr als zwei Kohlenstoffatome aufweisen, beträgt weniger als 20 %, bevorzugt höchstens 10 %, besonders bevorzugt höchstens 5 %, insbesondere höchstens 1 %, bezogen auf die Gesamtzahl an Verzweigungsstellen.

Vorzugsweise enthalten die Isoalkangemische wenigstens 70 Gew.-%, bevorzugt wenigstens 85 Gew.-%, insbesondere wenigstens 95 Gew.-%, Alkane mit 8 bis 20 Kohlenstoffatomen.

Vorzugsweise enthalten die Isoalkangemische wenigstens 70 Gew.-%, bevorzugt wenigstens 80 Gew.-%, insbesondere wenigstens 90 Gew.-% (wie z. B. wenigstens 94 Gew.-%), Alkane mit 12 bis 20 Kohlenstoffatomen.

Das erfindungsgemäße Alkangemisch enthält vorzugsweise wenigstens 70 Gew.-%, bevorzugt wenigstens 85 Gew.-%, insbesondere wenigstens 95 Gew.-%, Alkane mit einer geraden Kohlenstoffatomanzahl. Eine spezielle Ausführung ist ein Isoalkangemisch, das im Wesentlichen aus Alkanen mit 8 oder 12 oder 16 Kohlenstoffatomen besteht.

Die erfindungsgemäßen Isoalkangemische weisen eine oligomere Verteilung, d. h. eine Uneinheitlichkeit bezüglich der Kohlenstoffatomanzahl (und somit des Molekulargewichts) der enthaltenden Alkane auf. Die erfindungsgemäßen Isoalkangemische enthalten, bezogen auf ihr Gesamtgewicht, weniger als 95 Gew.-%, besonders bevorzugt höchstens 90 Gew.-%, Alkane desselben Molekulargewichts. Solche uneinheitlichen Isoalkangemische können besonders vorteilhafte anwendungstechnische Eigenschaften, speziell für einen Einsatz in bauchemischen Produkten, aufweisen. Dazu zählen speziell die rheologischen Eigenschaften der erfindungsgemäßen Isoalkangemische, wie das Spreitverhalten. So liegen die relativen Spreitwerte der erfindungsgemäßen Isoalkangemische (bezogen auf Paraffinum perliquidum als Standard) bei wenigstens 130 %, besonders bevorzugt bei wenigstens 140 %, insbesonders bevorzugt bei wenigstens 150 %. Sie übertreffen somit die aus dem Stand der Technik üblicherweise eingesetzten Ölkörper und insbesondere Isohexadecan (C$_{16}$-Isoalkan, und Gemische mit sehr hohem C$_{16}$-Isoalkangehalt, z. B. gemäß DE 10 2004 018 753). Die erfindungsgemäßen und nach dem erfindungsgemäßen Verfahren erhältlichen Isoalkangemische weisen eine kinematische Viskosität, bestimmt bei 40 °C nach DIN51562 (Messungen mit Ubbelohde-Viskosimeter mit hängendem Kugelniveau und Ringmarken zur Bestimmung der kinematischen Viskosität newtonscher Flüssigkeiten), von 1 bis 9, bevorzugt 2-5 mm$^2$/s auf. Typische Werte sind ca. 3 oder ca. 4 mm$^2$/s bei 40 °C.

Die erfindungsgemäßen und nach dem erfindungsgemäßen Verfahren erhältlichen Isoalkangemische weisen vorzugsweise eine Dichte im Bereich von 0,7 bis 0,82 g/cm$^3$, besonders bevorzugt im Bereich von 0,75 bis 0,8 g/cm$^3$, auf.

Die erfindungsgemäßen und nach dem erfindungsgemäßen Verfahren erhältlichen Isoalkangemische weisen vorzugsweise einen Brechungsindex im Bereich von 1,4 bis 1,5 auf.

Die erfindungsgemäßen Isoalkangemische weisen vorzugsweise einen Verzweigungsgrad V im Bereich von 0,1 bis 0,35, besonders bevorzugt 0,12 bis 0,3, insbesondere 0,15 bis 0,27 und speziell 0,17 bis 0,23 auf.

Im Rahmen der vorliegenden Erfindung ist der Verzweigungsgrad V molekulargewichtsunabhängig definiert als Zahl der Verzweigungen pro Kohlenstoffatom (V = Anzahl der Verzweigungen/Anzahl der Kohlenstoffatome, z. B. n-Octan: 0/8 = 0, Methylheptan: 1/8 = 0,125, Dimethylhexan: 2/8 = 0,25,.

Geeignete Isoalkangemische sind erhältlich durch ein Verfahren, bei dem man

1. a) ein Kohlenwasserstoffeinsatzmaterial bereitstellt, das wenigstens ein Olefin mit 2 bis 6 Kohlenstoffatomen enthält,

2. b) das Kohlenwasserstoffeinsatzmaterial einer Oligomerisierung an einem Übergangsmetall-haltigen Katalysator unterwirft,

3. c) das in Schritt b) erhaltene Oligomerisierungsprodukt hydriert. Dabei ist in vielen Fällen bereits eine Hydrierung von ca. 95 %, 90 % oder 85 % ausreichend.

Eine spezielle Ausführungsform dieses Verfahren ist ebenfalls Gegenstand der Erfindung.

**Schritt a)**

Geeignete Olefin-Einsatzmaterialien für Schritt a) sind prinzipiell alle Verbindungen, welche 2 bis 6 Kohlenstoffatome und wenigstens eine ethylenisch ungesättigte Doppelbindung enthalten.

Vorzugsweise wird in Schritt a) ein technisch zur Verfügung stehendes olefinhaltiges Kohlenwasserstoffgemisch eingesetzt.

Bevorzugte großtechnisch zur Verfügung stehende Olefingemische resultieren aus der Kohlenwasserstoff-Spaltung bei der Erdölverarbeitung, beispielsweise durch Katcracken, wie Fluid Catalytic Cracking (FCC), Thermocracken oder Hydrocracken mit anschließender Dehydrierung. Ein bevorzugtes technisches Olefingemisch ist der $C_4$-Schnitt. $C_4$-Schnitte sind beispielsweise durch Fluid Catalytic Cracking oder Steamcracken von Gasöl bzw. durch Steamcracken von Naphtha erhältlich. Je nach Zusammensetzung des $C_4$-Schnitts unterscheidet man den Gesamt-$C_4$-Schnitt (Roh-$C_4$-Schnitt), das nach der Abtrennung von 1,3-Butadien erhaltene so genannte Raffinat I sowie das nach der Isobutenabtrennung erhaltene Raffinat II. Ein weiteres geeignetes technisches Olefingemisch ist der bei der Naphtha-Spaltung erhältliche $C_5$-Schnitt. Für den Einsatz in Schritt a) geeignete olefinhaltige Kohlenwasserstoffgemische mit 4 bis 6 Kohlenstoffatomen lassen sich weiterhin durch katalytische Dehydrierung geeigneter großtechnisch zur Verfügung stehender Paraffingemische erhalten. So gelingt beispielsweise die Herstellung von $C_4$-Olefin-Gemischen aus Flüssiggasen (liquified petroleum gas, LPG) und verflüssigbaren Erdgasen (liquified natural gas, LNG). Letztere umfassen neben der LPG-Fraktion auch zusätzlich größere Mengen höhermolekularer Kohlenwasserstoffe (leichtes Naphtha) und eignen sich somit auch zur Herstellung von $C_5$- und $C_6$-Olefin-Gemischen. Die Herstellung von olefinhaltigen Kohlenwasserstoffgemischen, die Monoolefine mit 4 bis 6 Kohlenstoffatomen enthalten, aus LPG- oder LNG-Strömen gelingt nach üblichen, dem Fachmann bekannten Verfahren, die neben der Dehydrierung in der Regel noch einen oder mehrere Aufarbeitungsschritte umfassen. Dazu zählt beispielsweise die Abtrennung wenigstens eines Teils der in den zuvor genannten Olefin-Einsatzgemischen enthaltenen gesättigten Kohlenwasserstoffe. Diese können beispielsweise erneut zur Herstellung von Olefin-Einsatzmaterialien durch Crackung und/oder Dehydrierung eingesetzt werden. Die in Schritt a) eingesetzten Olefine können jedoch auch einen Anteil gesättigter Kohlenwasserstoffe enthalten, die sich gegenüber den Oligomerisierungsbedingungen inert verhalten. Der Anteil dieser gesättigten Komponenten beträgt im Allgemeinen höchstens 60 Gew.-%, bevorzugt höchstens 40 Gew.-%, besonders bevorzugt höchstens 20 Gew.-%, bezogen auf die Gesamtmenge der in dem KohlenwasserstoffEinsatzmaterial enthaltenen Olefine und gesättigten Kohlenwasserstoffe.

Vorzugsweise wird in Schritt a) ein Kohlenwasserstoffgemisch bereitgestellt, das 20 bis 100 Gew.-% $C_4$-Olefine, 0 bis 80 Gew.-% $C_5$-Olefine, 0 bis 60 Gew.-% $C_6$-Olefine und 0 bis 10 Gew.-% von den zuvor genannten Olefinen verschiedene Olefine, jeweils bezogen auf den Gesamtolefingehalt, enthält.

Vorzugsweise wird in Schritt a) ein Kohlenwasserstoffgemisch bereitgestellt, das einen Gehalt an linearen Monoolefinen von mindestens 80 Gew.-%, besonders bevorzugt mindestens 90 Gew.-% und insbesondere mindestens 95 Gew.-%, bezogen auf den Gesamtolefingehalt, aufweist. Dabei sind die linearen Monoolefine ausgewählt unter 1-Buten, 2-Buten, 1-Penten, 2-Penten, 1-Hexen, 2-Hexen, 3-Hexen und Mischungen davon. Zur Einstellung des gewünschten Verzweigungsgrades des Isoalkangemischs kann es von Vorteil sein, wenn das in Schritt a) eingesetzte Kohlenwasserstoffgemisch bis zu 20 Gew.-%, bevorzugt bis zu 5 Gew.-%, insbesondere bis zu 3 Gew.-% verzweigte Olefine, bezogen auf den Gesamtolefingehalt, enthält.

Besonders bevorzugt wird in Schritt a) ein $C_4$-Kohlenwasserstoffgemisch bereitgestellt.

Der Butengehalt, bezogen auf 1-Buten, 2-Buten und Isobuten, des in Schritt a) bereitgestellten $C_4$-Kohlenwasserstoffgemischs beträgt vorzugsweise 10 bis 100 Gew.-%, besonders bevorzugt 50 bis 99 Gew.-%, und insbesondere 70 bis 95 Gew.-%, bezogen auf den Gesamtolefingehalt. Vorzugsweise liegt das Verhältnis von 1-Buten zu 2-Buten in einem Bereich von 20 : 1 bis 1 : 2, insbesondere bei etwa 10 : 1 bis 1 : 1. Vorzugsweise enthält das in Schritt a) eingesetzte $C_4$-Kohlenwasserstoffgemisch weniger als 5 Gew.-%, insbesondere weniger als 3 Gew.-% Isobuten.

Die Bereitstellung der olefinhaltigen Kohlenwasserstoffe in Schritt a) kann eine Abtrennung von verzweigten Olefinen umfassen. Geeignet sind übliche, aus dem Stand der Technik bekannte Abtrennverfahren, die auf unterschiedlichen physikalischen Eigenschaften von linearen und verzweigten Olefinen bzw. auf unterschiedlichen Reaktivitäten, die selektive Umsetzungen ermöglichen, beruhen. So kann beispielsweise Isobuten von C$_4$-Olefingemischen, wie Raffinat I, durch eine der folgenden Methoden abgetrennt werden:

- Molsiebtrennung,
- fraktionierte Destillation,
- reversible Hydratisierung zu tert.-Butanol,
- sauer katalysierte Alkohol-Addition an einen tertiären Ether, z. B. Methanol-Addition zu Methyl-tert.-butylether (MTBE),
- irreversible katalysierte Oligomerisierung zu Di- und Tri-Isobuten,
- irreversible Polymerisation zu Polyisobuten,

Derartige Verfahren sind in K. Weissermel, H.-J. Arpe, Industrielle organische Chemie, 4. Auflage, S. 76 - 81, VCH-Verlagsgesellschaft Weinheim, 1994 beschrieben, worauf hier in vollem Umfang Bezug genommen wird.

Vorzugsweise wird in Schritt a) ein Raffinat II bereitgestellt.

Ein zum Einsatz in dem erfindungsgemäßen Verfahren geeignetes Raffinat II hat beispielsweise die folgende Zusammensetzung:

| 0,5 bis 5 Gew.-% | Isobutan, |
|---|---|
| 5 bis 20 Gew.-% | n-Butan, |
| 20 bis 40 Gew.-% | trans-2-Buten, |
| 10 bis 20 Gew.-% | cis-2-Buten, |
| 25 bis 55 Gew.-% | 1-Buten, |
| 0,5 bis 5 Gew.-% | Isobuten |

sowie Spurengase, wie 1,3-Butadien, Propen, Propan, Cyclopropan, Propadien, Methylcyclopropan, Vinylacetylen, Pentene, Pentane etc. im Bereich von jeweils maximal 1 Gew.-%.

Ein geeignetes Raffinat II weit folgende typische Zusammensetzung auf:

| i-,n-Butan | 26 Gew.-%, |
|---|---|
| i-Buten | 1 Gew.-%, |
| 1-Buten | 26 Gew.-%, |
| trans-2-Buten | 31 Gew.-%, |
| cis-2-Buten | 16 Gew.-%. |

Sind Diolefine oder Alkine in dem olefinreichen Kohlenwasserstoffgemisch vorhanden, so können diese vor der Oligomerisierung auf vorzugsweise weniger als 10 Gew.-ppm aus demselben entfernt werden. Sie werden bevorzugt durch selektive Hydrierung, z. B. gemäß EP 81 041 und DE 15 68 542 entfernt, besonders bevorzugt durch eine selektive Hydrierung bis auf einen Restgehalt von unter 5 Gew.-ppm, insbesondere 1 Gew.-ppm.

Aus dem olefinreichen Kohlenwasserstoffgemisch werden zweckmäßigerweise außerdem sauerstoffhaltige Verbindungen, wie Alkohole, Aldehyde, Ketone oder Ether, weitgehend entfernt. Hierzu kann das olefinreiche Kohlenwasserstoffgemisch mit Vorteil über ein Adsorptionsmittel, wie z. B. ein Molekularsieb, insbesondere eines mit einem Porendurchmesser von > 4 Å bis 5 Å, geleitet werden. Die Konzentration an sauerstoffhaltigen, schwefelhaltigen, stickstoffhaltigen und halogenhaltigen Verbindungen im olefinreichen Kohlenwasserstoffgemisch beträgt vorzugsweise weniger als 1 Gew.-ppm, insbesondere weniger als 0,5 Gew.-ppm.

**Schritt b)**

Im Rahmen der vorliegenden Erfindung umfasst der Begriff "Oligomere" Dimere, Trimere, Tetramere und höhere Produkte aus der Aufbaureaktion der eingesetzten Olefine. Vorzugsweise sind die in Schritt b) erhaltenen Oligomere ausgewählt unter Dimeren, Trimeren und Tetrameren. Die Oligomere sind ihrerseits olefinisch ungesättigt. Durch geeignete Wahl des zur Oligomerisierung eingesetzten Kohlenwasserstoffeinsatzmaterials und des Oligomerisierungskatalysators, wie im Folgenden beschrieben, können die angestrebten Isoalkane erhalten werden.

Zur Oligomerisierung in Schritt b) kann ein Reaktionssystem eingesetzt werden, das einen oder mehrere, gleiche oder verschiedene Reaktoren umfasst. Im einfachsten Fall wird zur Oligomerisierung in Schritt b) ein einzelner Reaktor eingesetzt. Es können jedoch auch mehrere Reaktoren eingesetzt werden, die jeweils gleiche oder verschiedene Vermischungscharakteristiken aufweisen. Die einzelnen Reaktoren können gewünschtenfalls durch Einbauten ein- oder mehrfach unterteilt sein. Bilden zwei oder mehrere Reaktoren das Reaktionssystem, so können diese untereinander beliebig verschaltet sein, z. B. parallel oder in Reihe. In einer geeigneten Ausführung wird z. B. ein Reaktionssystem eingesetzt, das aus zwei in Reihe geschalteten Reaktoren besteht.

Geeignete druckfeste Reaktionsapparaturen für die Oligomerisierung sind dem Fachmann bekannt. Dazu zählen die allgemein üblichen Reaktoren für Gas-fest- und Gasflüssig-Reaktionen, wie z. B. Rohrreaktoren, Rührkessel, Gasumlaufreaktoren, Blasensäulen etc., die gegebenenfalls durch Einbauten unterteilt sein können. Vorzugsweise werden Rohrbündelreaktoren oder Schachtöfen eingesetzt. Wird zur Oligomerisierung ein heterogener Katalysator eingesetzt, so kann dieser in einem einzigen oder in mehreren Katalysator-Festbetten angeordnet sein. Dabei ist es möglich, in verschiedenen Reaktionszonen unterschiedliche Katalysatoren einzusetzen. Bevorzugt ist jedoch der Einsatz des gleichen Katalysators in allen Reaktionszonen.

Die Temperatur bei der Oligomerisierungsreaktion liegt im Allgemeinen in einem Bereich von etwa 20 bis 280 °C, bevorzugt von 25 bis 200 °C, insbesondere von 30 bis 140 °C. Der Druck bei der Oligomerisierung liegt im Allgemeinen in einem Bereich von etwa 1 bis 300 bar, vorzugsweise von 5 bis 100 bar und insbesondere von 20 bis 70 bar. Umfasst das Reaktionssystem mehr als einen Reaktor, so können diese gleiche oder verschiedene Temperaturen und gleiche oder verschiedene Drücke aufweisen. So kann beispielsweise im zweiten Reaktor einer Reaktorkaskade eine höhere Temperatur und/oder ein höherer Druck als im ersten Reaktor eingestellt werden, z. B. um einen möglichst vollständigen Umsatz zu erzielen.

In einer speziellen Ausführung werden die zur Oligomerisierung eingesetzten Temperatur und Druckwerte so gewählt, dass das olefinhaltige Einsatzmaterial flüssig oder im überkritischen Zustand vorliegt.

Die Umsetzung in Schritt b) wird vorzugsweise adiabatisch durchgeführt. Dieser Begriff wird im Rahmen der vorliegenden Erfindung im technischen und nicht im physikochemischen Sinne verstanden. So verläuft die Oligomerisierungsreaktion in der Regel exotherm, so dass das Reaktionsgemisch beim Strömen durch das Reaktionssystem, beispielsweise ein Katalysatorbett, eine Temperaturerhöhung erfährt. Unter adiabatischer Reaktionsführung wird eine Vorgehensweise verstanden, bei der die in einer exothermen Reaktion freiwerdende Wärmemenge von der Reaktionsmischung im Reaktor aufgenommen und keine Kühlung durch Kühlvorrichtungen angewandt wird. Somit wird die Reaktionswärme mit dem Reaktionsgemisch aus dem Reaktor abgeführt, abgesehen von einem Restanteil, der durch natürliche Wärmeleitung und Wärmeabstrahlung vom Reaktor an die Umgebung abgegeben wird.

Zur Oligomerisierung in Schrltt b) wird ein Übergangsmetall-haltiger Katalysator eingesetzt. Bevorzugt handelt es sich dabei um heterogene Katalysatoren. Bevorzugte Katalysatoren, die bekanntermaßen eine geringe Oligomeren-Verzweigung Nickel enthaltende Katalysatoren für die Umsetzung in Schritt a), die bekanntermaßen eine geringe Oligomeren-Verzweigung bewirken, sind dem Fachmann allgemein bekannt. Dazu zählen die in Catalysis Today, 6, 329 (1990), insbesondere Seiten 336-338, sowie die in der DE-A 43 39 713 (= WO-A 95/14647) und der DE-A 199 57 173 beschriebenen Katalysatoren, auf die hiermit ausdrücklich Bezug genommen wird. Ein geeignetes Oligomerisierungsverfahren, bei dem der zur Oligomerisierung eingesetzten Feed-Strom aufgeteilt und mindestens zwei bei unterschiedlichen Temperaturen betriebenen Reaktionszonen zugeführt wird ist in der EP-A 1 457 475 beschrieben, auf die ebenfalls Bezug genommen wird.

Die eingesetzten heterogenen Nickel enthaltenden Katalysatoren können unterschiedliche Strukturen aufweisen. Geeignet sind prinzipiell Vollkatalysatoren sowie geträgerte Katalysatoren. Letztere werden bevorzugt eingesetzt. Die Trägermaterialien können z. B. Kieselsäure, Tonerde, Aluminosilicate, Aluminosilicate mit Schichtstrukturen und Zeolithe, wie Mordenit, Faujasit, Zeolith X, Zeolith-Y und ZSM-5, Zirkoniumoxid, das mit Säuren behandelt ist, oder sulfatiertes Titandioxid sein. Besonders geeignet sind Fällungskatalysatoren, die durch Mischen wässriger Lösungen von Nickelsalzen und Silicaten, z. B. Natriumsilicat mit Nickelnitrat, und gegebenenfalls Aluminiumsalzen, wie Aluminiumnitrat, und Calcinieren erhältlich sind. Weiterhin sind Katalysatoren verwendbar, die durch Einlagerung von $Ni^{2+}$-Ionen durch Ionenaustausch in natürliche oder synthetische Schichtsilicate, wie Montmorillonite, erhalten werden. Geeignete Katalysatoren können auch durch Imprägnieren von Kieselsäure, Tonerde oder Alumosilicaten mit wässrigen Lösungen löslicher Nickelsalze, wie Nickelnitrat, Nickelsulfat oder Nickelchlorid, und anschließende Calcinierung erhalten werden.

Nickeloxid enthaltende Katalysatoren sind bevorzugt. Besonders bevorzugt sind Katalysatoren, die im Wesentlichen aus NiO, $SiO_2$, $TiO_2$ und/oder $ZrO_2$ sowie gegebenenfalls $Al_2O_3$ bestehen. Am meisten bevorzugt ist ein Katalysator, der als wesentliche aktive Bestandteile 10 bis 70 Gew.-% Nickeloxid, 5 bis 30 Gew.-% Titandioxid und/oder Zirkondioxid, 0 bis 20 Gew.-% Aluminiumoxid und als Rest Siliciumdioxid enthält. Ein solcher Katalysator ist durch Fällung der Katalysatormasse bei pH 5 bis 9 durch Zugabe einer Nickelnitrat enthaltenden wässrigen Lösung zu einer Alkaliwasserglaslösung, die Titandioxid und/oder Zirkondioxid enthält, Filtrieren, Trocknen und Tempern bei 350 bis 650 °C erhältlich. Zur Herstellung dieser Katalysatoren wird im Einzelnen auf die DE-A 43 39 713 verwiesen. Auf die Offen-

barung dieser Druckschrift und den darin zitierten Stand der Technik wird vollinhaltlich Bezug genommen.

In einer weiteren Ausführungsform wird als Katalysator in Schritt b) ein Nickelkatalysator gemäß der DE-A 199 57 173 eingesetzt. Dabei handelt es sich im Wesentlichen um Aluminiumoxid, das mit einer Nickelverbindung und einer Schwefelverbindung beaufschlagt wurde. Vorzugsweise liegt im fertigen Katalysator ein molares Verhältnis von Schwefel zu Nickel im Bereich von 0,25 : 1 bis 0,38 : 1 vor.

Der Katalysator liegt vorzugsweise in stückiger Form, z. B. in Form von Tabletten, z. B. mit einem Durchmesser von 2 bis 6 mm und einer Höhe von 3 bis 5 mm, Ringen mit z. B. 5 bis 7 mm Außendurchmesser, 2 bis 5 mm Höhe und 2 bis 3 mm Lochdurchmesser, oder Strängen unterschiedlicher Länge eines Durchmessers von z. B. 1,5 bis 5 mm, vor. Derartige Formen werden auf an sich bekannte Weise durch Tablettierung oder Extrusion, meist unter Verwendung eines Tablettierhilfsmittels, wie Graphit oder Stearinsäure, erhalten.

**Schritt c)**

Im Schritt c) können als Hydrierungskatalysatoren in der Regel alle Katalysatoren des Standes der Technik eingesetzt werden, welche die Hydrierung von Olefinen zu den entsprechenden Alkanen katalysieren. Die Katalysatoren können sowohl in heterogener Phase als auch als Homogenkatalysatoren eingesetzt werden. Vorzugsweise enthalten die Hydrierungskatalysatoren wenigstens ein Metall der Gruppe VIII.

Besonders geeignete Metalle der Gruppe VIII sind ausgewählt unter Ruthenium, Cobalt, Rhodium, Nickel, Palladium und Platin.

Die Metalle können auch als Gemische eingesetzt werden. Außerdem können die Katalysatoren neben den Metallen der Gruppe VIII auch weitere Metalle, beispielsweise Metalle der Gruppe VIIa, insbesondere Rhenium, oder Metalle der Gruppe Ib, d. h. Kupfer, Silber oder Gold, enthalten. Besonders bevorzugte Metalle der Gruppe VIII sind Ruthenium, Nickel, Palladium und Platin, insbesondere Platin, Nickel und Palladium, und stärker bevorzugt Palladium und Nickel. Speziell enthält der Katalysator Palladium als katalytisch aktive Spezies.

Wird ein Heterogenkatalysator eingesetzt, so liegt dieser geeigneter Weise in feinverteilter Form vor. Die feinverteilte Form wird beispielsweise folgendermaßen erreicht:

- Schwarzkatalysator: Das Metall wird kurz vor der Verwendung als Katalysator aus der Lösung eines seiner Salze reduktiv abgeschieden.
- Adams-Katalysator: Die Metalloxide, insbesondere die Oxide von Platin und Palladium, werden in situ durch den zur Hydrierung eingesetzten Wasserstoff reduziert.
- Skelett- oder Raney-Katalysator: Der Katalysator wird als "Metallschwamm" aus einer binären Legierung des Metalls (insbesondere Nickel oder Cobalt) mit Aluminium oder Silicium durch Herauslösen eines Partners mit Säure oder Lauge hergestellt. Reste des ursprünglichen Legierungspartners wirken oft synergistisch.
- Trägerkatalysator: Schwarzkatalysatoren lassen sich auch auf der Oberfläche einer Trägersubstanz niederschlagen. Geeignete Träger und Trägermaterialien sind nachfolgend beschrieben.

Solche Heterogenkatalysatoren sind in allgemeiner Form beispielsweise im Organikum, 17. Auflage, VEB Deutscher Verlag der Wissenschaften, Berlin, 1988, S. 288 beschrieben. Außerdem werden heterogene Hydrierungskatalysatoren, die für die Reduktion von Olefinen zu Alkanen geeignet sind, in folgenden Schriften näher beschrieben:

Die US 3,597,489, US 2,898,387 und GB 799,396 beschreiben die Hydrierung von Benzol zu Cyclohexan an Nickel- und Platinkatalysatoren in der Gas- oder Flüssigphase. GB 1,155,539 beschreibt die Verwendung eines mit Rhenium dotierten Nickelkatalysators zur Hydrierung von Benzol. Die US 3,202,723 beschreibt die Hydrierung von Benzol mit Raney-Nickel. Ruthenium-haltige Suspensionskatalysatoren, die mit Palladium, Platin oder Rhodium dotiert sind, werden in der SU 319582 zur Hydrierung von Benzol zu Cyclohexan eingesetzt. Aluminiumoxid-geträgerte Katalysatoren werden in der US 3,917,540 und US 3,244,644 beschrieben. Auf die in diesen Schriften beschriebenen Hydrierungskatalysatoren wird in vollem Umfang Bezug genommen.

Je nach Ausgestaltung des Hydrierverfahrens kann das Trägermaterial verschiedene Gestalten aufweisen. Wird die Hydrierung in Sumpffahrweise durchgeführt, so wird das Trägermaterial in der Regel in Form eines feinteiligen Pulvers eingesetzt. Wird der Katalysator hingegen in Form eines Festbettkatalysators eingesetzt, so setzt man z. B. Formkörper als Trägermaterial ein. Solche Formkörper können in Gestalt von Kugeln, Tabletten, Zylindern, Hohlzylindern, Raschigringen, Strängen, Sattelkörpern, Sternen, Spiralen usw. mit einer Größe (Abmessung der längsten Ausdehnung) von etwa 1 bis 30 mm vorliegen. Außerdem können die Träger in Form von Monolithen, wie sie z. B. in der DE-A-19642770 beschrieben sind, vorliegen. Des Weiteren können die Träger in Form von Drähten, Blechen, Gittern, Netzen, Geweben und dergleichen eingesetzt werden.

Die Träger können aus metallischem oder nichtmetallischem, porösem oder nichtporösem Material bestehen.

Geeignete metallische Materialien sind beispielsweise hochlegierte Edelstähle. Geeignete nichtmetallische Materialien sind beispielsweise mineralische Werkstoffe, z. B. natürliche und synthetische Mineralien, Gläser oder Keramiken, Kunststoffe, z. B. künstliche oder natürliche Polymere, oder eine Kombination aus beiden.

Bevorzugte Trägermaterialien sind Kohle, insbesondere Aktivkohle, Siliciumdioxid, insbesondere amorphes Siliciumdioxid, Aluminiumoxid, und außerdem die Sulfate und Carbonate der Erdalkalimetalle, Calciumcarbonat, Calciumsulfat, Magnesiumcarbonat, Magnesiumsulfat, Bariumcarbonat und Bariumsulfat.

Der Katalysator kann durch übliche Verfahren auf den Träger aufgebracht werden, z. B. durch Tränken, Benetzen oder Besprühen des Trägers mit einer Lösung, die den Katalysator oder eine geeignete Vorstufe davon enthält.

Geeignete Träger und Verfahren zum Aufbringen des Katalysators auf diese sind beispielsweise in der DE-A 101 28 242 beschrieben, auf die hiermit in vollem Umfang Bezug genommen wird.

Auch homogene Hydrierungskatalysatoren können in das erfindungsgemäße Verfahren eingesetzt werden. Beispiele hierfür sind die Nickelkatalysatoren, die in der EP-A 0 668 257 beschrieben sind. Nachteilig bei einer Verwendung von Homogenkatalysatoren ist jedoch ihre Herstellungskosten und auch die Tatsache, dass sie in der Regel nicht regenerierbar sind.

Daher werden im erfindungsgemäßen Verfahren vorzugsweise heterogene Hydrierungskatalysatoren eingesetzt.

Besonders bevorzugt enthalten die im erfindungsgemäßen Verfahren eingesetzten Heterogenkatalysatoren wenigstens ein Metall der VIII. Nebengruppe, das ausgewählt ist unter Ruthenium, Nickel, Cobalt, Palladium und Platin, und gegebenenfalls ein weiteres Übergangsmetall, insbesondere der Nebengruppe VIIa, Ib oder IId und insbesondere mit Kupfer.

Besonders bevorzugt wird das Metall in geträgerter Form oder als Metallschwamm eingesetzt. Beispiele für geträgerte Katalysatoren sind insbesondere Palladium, Nickel oder Ruthenium auf Kohle, insbesondere Aktivkohle, Siliciumdioxid, insbesondere auf amorphem Siliciumdioxid, Bariumcarbonat, Calciumcarbonat, Magnesiumcarbonat oder Aluminiumoxid, wobei die Träger in den oben beschriebenen Formen vorliegen können. Bevorzugte Trägerformen sind die oben beschriebenen Formkörper.

Die metallischen Katalysatoren können auch in Form ihrer Oxide, insbesondere Palladiumoxid, Platinoxid oder Nickeloxid, eingesetzt werden, die dann unter den Hydrierbedingungen zu den entsprechenden Metallen reduziert werden.

Als Metallschwamm wird insbesondere Raney-Nickel eingesetzt.

Speziell verwendet man im erfindungsgemäßen Verfahren Nickel und Kupfer auf Trägermaterialien, wie Siliciumdioxid, als Hydrierungskatalysator.

Der Hydrierungskatalysator wird bevorzugt im Festbett angeordnet.

Die Hydrierung erfolgt bei einer Temperatur von vorzugsweise 20 bis 250 °C, besonders bevorzugt von 50 bis 240 °C und insbesondere von 120 bis 180 °C.

Der Reaktionsdruck der Hydrierreaktion liegt vorzugsweise im Bereich von 1 bis 300 bar, besonders bevorzugt von 10 bis 150 bar und insbesondere von 20 bis 70 bar.

Sowohl Reaktionsdruck als auch Reaktionstemperatur hängen unter anderem von der Aktivität und Menge des eingesetzten Hydrierkatalysators ab und können im Einzelfall vom Fachmann bestimmt werden.

Die Hydrierung kann in einem geeigneten Lösungsmittel oder vorzugsweise in Substanz vorzugsweise. Geeignete Lösungsmittel sind solche, die unter den Reaktionsbedingungen inert sind, d. h. weder mit dem Edukt oder Produkt reagieren noch selbst verändert werden, und die sich problemlos von den erhaltenen Isoalkanen abtrennen lassen. Zu den geeigneten Lösungsmitteln gehören offenkettige und cyclische Ether, wie Diethylether, Methyl-tert.-Butylether, Tetrahydrofuran oder 1,4-Dioxan und Alkohole, insbesondere $C_1$-$C_3$-Alkanole, wie Methanol, Ethanol, n-Propanol oder Isopropanol. Geeignet sind auch Gemische der vorstehend genannten Lösungsmittel.

Der für die Hydrierung erforderliche Wasserstoff kann sowohl in Reinform als auch in Form von Wasserstoff-haltigen Gasgemischen eingesetzt werden. Letztere dürfen jedoch keine schädlichen Mengen an Katalysatorgiften, wie CO, enthalten. Beispiele für geeignete Wasserstoff-haltige Gasgemische sind solche aus dem Reforming-Verfahren. Vorzugsweise wird jedoch Wasserstoff in Reinform eingesetzt.

Die Hydrierung wird bevorzugt kontinuierlich durchgeführt.

Die Entfernung des Lösungsmittels erfolgt durch übliche Verfahren, beispielsweise destillativ, insbesondere unter verringertem Druck.

In einer speziellen Ausführung des erfindungsgemäßen Verfahrens wird das in Schritt b) erhaltene Oligomerisierungsprodukt und/oder das in Schritt c) erhaltene Hydrierungsprodukt einer Auftrennung unterzieht. Dabei wird zumindest eine an einem bestimmten Oligomeren, bzw. hydrierten Oligomeren angereicherte Fraktion erhalten. So kann beispielsweise ein $C_4$-Kohlenwasserstoffgemisch in Schritt b) einer Oligomerisierung unterzogen und anschließend, vor der Hydrierung, einer Auftrennung unterworfen werden, wobei wenigstens eine an $C_8$-, $C_{12}$- oder $C_{16}$-Oligomeren angereicherte Fraktion erhalten wird. Diese Oligomeren-angereicherte(n) Fraktion(en) wird/werden dann zur Hydrierung eingesetzt. Desgleichen kann ein Oligomerengemisch aus Schritt b) zunächst ohne Auftrennung hydriert und anschlie-

**EP 2 160 368 B2**

ßend das Produktgemisch der Hydrierung einer Auftrennung unterworfen werden, wobei beispielsweise bei Einsatz eines $C_4$-Kohlenwasserstoffgemischs zur Oligomerisierung wenigstens eine an $C_8$-, $C_{12}$- oder $C_{16}$-Isoalkanen angereicherte Fraktion erhalten wird. Die an einem der vorgenannten Alkane angereicherten Fraktionen enthalten in einer bevorzugten Ausführung, wie eingangs ausgeführt, weitere davon verschiedene Alkane. Dabei handelt es sich vorzugsweise im Wesentlichen um Alkane mit höherem Molekulargewicht als das angereicherte Alkan. Bevorzugt wird dann beispielsweise eine an $C_{16}$-Isoalkanen angereicherte Fraktion erhalten, die im Wesentlichen keine $C_8$- und/oder $C_{12}$-Isoalkane enthält, die aber $C_{20}$-Isoalkane und gegebenenfalls höhere Homologe enthält.

Zur Auftrennung kann das Reaktionsgemisch der Oligomerisierung oder der Hydrierung einem oder mehreren Trennschritten unterworfen werden. Geeignete Trennvorrichtungen sind die üblichen, dem Fachmann bekannten Apparaturen. Dazu zählen z. B. Destillationskolonnen, z. B. Bodenkolonnen, die gewünschtenfalls mit Glocken, Siebplatten, Siebböden, Ventilen, Seitenabzügen, etc. ausgerüstet sein können, Verdampfer, wie Dünnschichtverdampfer, Fallfilmverdampfer, Wischblattverdampfer, Sambay-Verdampfer, etc. und Kombinationen davon. Bevorzugt erfolgt die Isolierung der Olefinfraktion durch ein- oder mehrstufige fraktionierte Destillation.

Die erfindungsgemäßen Isoalkangemische eignen sich besonders vorteilhaft für einen Einsatz in pulverförmigen bauchemischen Produkten. Sie sind im Allgemeinen geruchslos und weisen insbesondere keine vom Verarbeiter als "fremdartig" oder "chemisch" empfundene Geruchskomponenten, z. B. einen olefinartigen Geruch, auf,

Die erfindungsgemäßen Isoalkangemische sind des Weiteren in der Regel farblos oder weisen nur eine geringe Eigenfarbe auf. Vorzugsweise weisen die erfindungsgemäßen und nach dem erfindungsgemäßen Verfahren erhältlichen Isoalkangemische eine Hazen- oder APHA-Farbzahl (bestimmt nach DIN 6271) von höchstens 6, besonders bevorzugt von höchstens 5, auf. Je nach Molekulargewicht sind die Isoalkane von flüssiger bis ölartigen Konsistenz. Für einen Einsatz in pulverförmigen bauchemischen Produkten werden vorzugsweise Isoalkangemische eingesetzt, die Isoalkane mit 8 bis 28, bevorzugt 8 bis 20 Kohlenstoffatomen aufweisen. Diese Isoalkangemische sind unter Normalbedingungen (25 °C, 1013 mbar) flüssig.

Die erfindungsgemäßen Isoalkane zeichnen sich gegenüber den aus dem Stand der Technik bekannten Ölkörpern zur Entstaubung von pulverförmigen bauchemischen Produkten durch vergleichbare oder bessere anwendungstechnische Eigenschaften aus. So besitzen sie eine ausgezeichnete Hautverträglichkeit, führen nicht zu Irritationen, bilden bei der Einmischung keine Verklumpungen und verteilen sich rasch auf der Oberfläche der Inhaltsstoffe pulverförmiger bauchemischer Produkte. Ihre Flammpunkte sind ausreichend hoch, um bei der Herstellung und Anwendung strengen sicherheitstechnischen Standards zu genügen. So weist beispielsweise ein erfindungsgemä-βes $C_{16}$-Isoalkangemisch in der Regel einen Flammpunkt von wenigstens 100 °C, wie z. B. von 105 °C, auf.

Weiterhin zeichnen sich die erfindungsgemäßen Additive durch eine niedrige Viskosität, und hohe Effektivität aus ("spreading effect"), die es den Anwendern erlaubt bei kleinsten Einsatzmengen (0,25 bis 0,5 %) hohe Entstaubungseffekte zu erreichen.

Durch den vorhandenen "spreading effect" und die niedrige Viskosität findet bei der Zudosierung des Entstaubungsmittels keine Klümpchenbildung in dem zu entstaubenden Produkt statt. Dem Formulierer obiger Produkte ist es somit möglich ohne besondere Sprüheinrichtung das Entstaubungsmittel direkt in seinen vorhandenen Mischprozess zu dosieren.

Mit den erfindungsgemäßen Isoalkangemischen entstaubtes, redispergiertes Polymerpulver, kann sogar als Träger zum Entstauben weiterer Formulierungskomponenten (z. B. Zement) dienen. So können z. B. bei Zusatz von 2 % Entstaubungsmittel zu 5 g Polymerpulver 35 g Portlandzement (CEMI 42,5) entstaubt werden. Hierbei genügt es, wenn das "getränkte" Polymerpulver einfach mit dem Zement gemischt wird.

In einer speziellen nicht erfindungsgemäßen Ausführung werden in pulverförmigen bauchemischen Produkten Isoalkangemische eingesetzt, die eine hohe Einheitlichkeit bezüglich des Molekulargewichts der enthaltenen Isoalkane aufweisen. Dabei handelt es sich bevorzugt um Dimere, Trimere oder Tetramere. Diese Isoalkangemische weisen dann wenigstens 95 % Isoalkane gleicher Kohlenstoffatomanzahl auf.

Dazu zählen insbesondere Isoalkangemische, die größer 95 Gew.-%, bevorzugt wenigstens 96 Gew.-%, insbesondere wenigstens 97 Gew.-% Alkane desselben Molekulargewichts aufweisen. Bevorzugt handelt es sich um $C_{16}$-Isoalkangemische (im Folgenden als "hoch $C_{16}$-haltige Isoalkangemische" bezeichnet).

Ein nicht erfindungsgemäße Ausführungsform ist daher ein Entstaubungsmittel für pulverförmige bauchemische Produkte, das wenigstens ein $C_{16}$-Alkane aufweisendes Gemisch enthält, wobei das Gemisch einen Anteil an $C_{16}$-Alkanen von größer gleich 95 Gew.-% aufweist. Bevorzugt enthalten die Entstaubungsmittel für pulverförmige bauchemische Produkte dann ein $C_{16}$-Alkane aufweisendes Gemisch, das dadurch gekennzeichnet ist, dass das Gemisch eine Zusammensetzung aufweist, bei der die enthaltenen Moleküle im Mittel weniger als 1,0 quartäre C-Atome je Molekül enthalten, wobei das Gemisch einen Anteil an $C_{16}$-Alkanen von größer gleich 95 Massen-% und wobei das Gemisch einen Anteil von weniger als 5 Massen-% an n-Hexadecan aufweist.

Derartige $C_{16}$-Isoalkane aufweisende Gemische sind erhältlich durch ein Verfahren, wobei

1. a) ein Buten-haltiger $C_4$-Kohlenwasserstoffstrom, der weniger als 5 Massen-%, bezogen auf die Summe aller

# EP 2 160 368 B2

Butene, an Isobuten aufweist, in Gegenwart eines Nickel-haltigen Katalysators oligomerisiert wird,

2. b) dass aus dem Reaktionsgemisch eine $C_{16}$-Olefinfraktion abgetrennt wird, und

3. c) dass die $C_{16}$-Fraktion hydriert wird.

Geeignete $C_{16}$-Isoalkangemische und ein Verfahren zu ihrer Herstellung sind in der DE 10 2004 018 753 A1 beschrieben, auf die hier in vollem Umfang Bezug genommen wird. In der DE 10 2004 018 753 A1werden die Kohlenwasserstoffgemische als "$C_{16}$- "Alkan"gemische bezeichnet, obwohl sie auch nur einen sehr geringen Anteil an n-Hexadecan aufweisen. Im Rahmen der vorliegenden Anmeldung wurde die gleichbedeutende Bezeichnung "Iso"alkangemisch verwendet, um Alkangemische zu bezeichnen, die verzweigte Alkane enthalten.

Besonders bevorzugt ist jedoch der Einsatz der erfindungsgemäßen und nach dem erfindungsgemäßen Verfahren erhältlichen Isoalkangemische, die, wie zuvor ausgeführt, besonders vorteilhafte Eigenschaften aufweisen. Insbesondere übertreffen sie hinsichtlich der rheologischen Eigenschaften und speziell beim Spreitverhalten alle aus dem Stand der Technik bekannten Ölkörper, auch die der DE 10 2004 018 753 A1, die ansonsten gute anwendungstechnische Eigenschaften aufweisen.

Ein weiterer Gegenstand der Erfindung sind pulverförmige bauchemische Produkte mit vermindertem Staubbildungsverhalten enthaltend wenigstens ein Isoalkangemisch, weitere übliche Inhaltsstoffe bzw. Bestandteile, wie beispielsweise Erhärtungsbeschleuniger, Sulfatträger Entschäumer etc.

Die erfindungsgemäßen und nach dem erfindungsgemäßen Verfahren erhältlichen Isoalkangemische sind frei von Eigengerüchen und weisen ein äußerst weites Flüssigintervall auf (zumindest von -70 bis +200 °C).

Die Menge der als Entstaubungsadditive eingesetzten Isoalkangemische beträgt, bezogen auf die zu entstaubenden bauchemischen Produkte 0,01 bis 10 Gew.-%, bevorzugt 0,1 bis 3 Gew.-%, insbesondere bevorzugt 0,2 bis 1 Gew.-%.

Ein weiterer Gegenstand der Erfindung ist ein Verfahren zur Herstellung von pulverförmigen bauchemischen Produkten mit vermindertem Staubbildungsverhalten enthaltend die erfindungsgemäßen Isoalkangegmische.

Das erfindungsgemäße Isoalkangemisch wird mit dem bauchemischen Produkt in Kontakt gebracht bzw. beaufschlagt. Im Allgemeinen erfolgt dies durch Aufsprühen ("Bedüsen") der Entstaubungsadditive auf die bauchemischen Produkte mit einem, wie zuvor definierten Entstaubungsadditiv . Die Beaufschlagung bzw. das Inkontaktbringen der erfindungsgemäß eingesetzten Entstaubungsadditive mit den zu entstaubenden bauchemischen Produkten kann aber auch auf jede andere geeignete Art und Weise erfolgen, die dem Fachmann geläufig ist, z. B. Mischen der zu entstaubenden bauchemischen Produkte mit den flüssigen Entstaubungsadditiven etc. Erfindungsgemäß bevorzugt ist jedoch ein Sprühauftrag der flüssigen Entstaubungsadditive, weil dies die einfachste und ökonomischste Variante der Beaufschlagung der zu entstaubenden Produkte ist.

Einzelkomponenten, die mit Entstaubungsmittel versetzt werden, können sogar als Träger zum Entstauben weiterer Formulierungskomponenten (z. B. Zement) dienen. Bei Zusatz von 2,2 % Entstaubungsmittel zu 5g Polymerpulver, (Acronal® S695P, BASF) können z. B. 35 g Portlandzement (CEM I 42,5) entstaubt werden. Hierbei genügt es, wenn das "getränkte" Polymerpulver einfach mit dem Zement gemischt wird.

Dem großtechnischen Anwender steht somit die Möglichkeit offen, vorentstaubte Komponenten durch einfaches Zumischen in seiner Anlage zu verwenden und die gesamte Trockenmischung damit zu entstauben. Aufwendige Prozessänderungen entfallen dadurch.

Durch die niedrige Viskosität und gute Verteilung des Produkts sind auch einfache Zudosierungen des Entstaubungsmittels im Prozess möglich.

Wie zuvor beschrieben, führen die erfindungsgemäß eingesetzten Isoalkangemische bei ihrer Verwendung als Entstaubungsaddititve für trockene, pulverförmige bauchemische Produkte zu einer deutlichen Minimierung der Staubfreisetzung bei diesen Produkten.

Dieser Effekt kann noch weiter gesteigert werden, wenn die erfindungsgemäßen Additive in Kombination mit weiteren geeigneten aus dem Stand der Technik bekannten Additiven, beispielsweise Fasern, wie Polyethylen- oder Polypropylenfasern, die eine Entstaubungswirkung erzielen eingesetzt werden.

Die Erfindung wird anhand der folgenden, nicht einschränkenden Beispiele näher erläutert.

**Beispiele**

**I. Herstellungsbeispiele:**

**Beispiel 1: Herstellung eines Isoalkengemischs**

Man stellte ein Oligomerisat gemäß Beispiel 3 aus WO 95/14647ausgehend von dem darin beschriebenen $C_4$-Kohlenwasserstoffgemisch unter Verwendung des in Beispiel 1 aus WO 95/14647 beschriebenen Katalysators her. 2 kg dieses Oligomerisats unterzog man einer Fraktionierung an einer 80 cm Füllkörperkolonne (Maschendrahtwendel) mit einem Rücklaufverhältnis 1 : 5. Man erhielt:

| Fraktion | Siedeintervall [°C] | Druck [mbar] | Menge [g] | Bezeichnung |
|----------|---------------------|--------------|-----------|----------------|
| 1a | 100-130 | 950 | 1450 | Buten-Dimer |
| 1b | 100-120 | 100 | 350 | Buten-Trimer |
| 1c | Sumpf | - | 180 | Buten-Tetramer |

Gemäß der GC-Analyse bestand Fraktion 1 c aus 7 % $C_{12}$-Oligomerisierungsprodukt, 70 % $C_{16}$-Oligomerisierungsprodukt, 17 % $C_{20}$-Oligomerisierungsprodukt sowie höheren Homologen.

### Beispiel 2: Hydrierung von Fraktion 1 c

In einen 9-I-Rührdruckbehälter gab man 6 I eines Buten-Tetrameren 1 c aus Beispiel 1 und 50 g Pd/Aktuvkohle (10 % Pd). Es wurde zunächst bis maximal 50 bar (5 MPa) Wasserstoff aufgepresst, so dass die Temperatur nicht über 50 °C stieg. Danach wurde bei 50 °C der Wasserstoffdruck auf 200 bar (20 MPa) erhöht und 2 Stunden nachhydriert. Nach beendeter Hydrierung wurde der Katalysator zunächst über einen Faltenfilter und dann über eine kurze Säule mit $Al_2O_3$ abgetrennt. Man erhielt 4,4 kg einer klaren, hellen, geruchlosen Flüssigkeit.

$^1$H-NMR (16 Scans, 400 MHz, 10 % in CDCl$_3$): keine Signale im Bereich $\delta$ 7,0 - 2,5 ppm nachweisbar; 48 % des Integrals im Bereich $\delta$ 0,6 - 1 ppm.

### Beispiel 3: Hydrierung von Fraktion 1a

In einen 3,5-I-Rührdruckbehälter gab man 2 I eines Buten-Dimeren 1 a aus Beispiel 1 und 20 g Pd/Aktivkohle (10 % Pd). Es wurde zunächst bis maximal 20 bar (2 MPa) Wasserstoff aufgepresst, so dass die Temperatur nicht über 50 °C stieg. Danach wurde bei 50 °C der Wasserstoffdruck auf 200 bar (20 MPa) erhöht und 2 Stunden nachhydriert. Nach beendeter Hydrierung wurde der Katalysator zunächst über einen Faltenfilter und dann über eine kurze Säule mit $Al_2O_3$ abgetrennt. Man erhielt 1,2 kg einer klaren, hellen, geruchlosen Flüssigkeit.

$^1$H-NMR (16 Scans, 400 MHz, 10 % in CDCl$_3$): keine Signale im Bereich $\delta$ 7,0 - 2,5 ppm nachweisbar; 53 % des Integrals im Bereich $\delta$ 0,6 - 1 ppm.

### Beispiel 4: Hydrierung von Fraktion 1 b

In einen 3,5-1-Rührdruckbehälter gab man 2 I eines Buten-Trimeren 1 b aus Beispiel 1 und 20 g Pd/Aktivkohle (10 % Pd). Es wurde zunächst bis maximal 20 bar (2 MPa) Wasserstoff aufgepresst, so dass die Temperatur nicht über 50 °C stieg. Danach wurde bei 50 °C der Wasserstoffdruck auf 200 bar (20 MPa) erhöht und 2 Stunden nachhydriert. Nach beendeter Hydrierung wurde der Katalysator zunächst über einen Faltenfilter und dann über eine kurze Säule mit $Al_2O_3$ abgetrennt. Man erhielt 1,2 kg einer klaren, hellen, geruchlosen Flüssigkeit. 1,2 kg einer klaren, hellen, geruchlosen Flüssigkeit.

$^1$H-NMR (16 Scans, 400 MHz, 10 % in CDCl$_3$): keine Signale im Bereich $\delta$ 7,0 - 2,5 ppm nachweisbar; 51 % des Integrals im Bereich $\delta$ 0,6 - 1 ppm.

In Tabelle 1 sind der Verzweigungsgrad V (= Zahl der Verzweigungen / C-Atom) sowie das Integral im Bereich $\delta$ 0,6 -1 ppm der Isoalkangemische aus den Beispielen 2, 3, 4 und 5 angegeben.

Tabelle 1

| Beispiel | Isoalkangemisch | Integral 0,6 - 1 ppm | Verzweigungen/C |
|----------|-------------------------|----------------------|-----------------|
| 2 | Hydriertes Buten-Tetramer | 48 % | 0,21 |
| 3 | Hydriertes Buten-Dimer | 53 % | 0,15 |
| 4 | Hydriertes Buten-Trimer | 51 % | 0,2 |

## II. Spreitverhalten

Die im Folgenden angegebenen Spreitwerte wurden bestimmt nach dem folgenden Verfahren: Ein Stück Filterpapier (Filterpapier Typ 1243/90, weiß, Bogen 500 x 500 mm, Hersteller: Pörringer, ca. 200 x 200 mm) wird auf ein Uhrglas bzw. eine Petrischale frei schwebend gelegt und mit 10 μl des zu vermessenen Lipids mittig versetzt. Nach 10 Minuten wird die lipidbenetzte Fläche markiert, ausgeschnitten und ausgewogen. Das gleiche Verfahren erfolgt mit dem internen Standard (Paraffinum perliquidum). Aus den ermittelten Werten wird der relative Spreitwert nach folgender Formel berechnet:

relativer Spreitwert = (Fläche Messsubstanz x 100) / Fläche Paraffinum perliquidum

Tabelle 2

| Öl (Tradenames) | Relativer Spreitwert | INCI/chemische Bezeichnung/Hersteller |
|---|---|---|
|  | [%] |  |
| Abil® 350 | 55 | Dimethicone |
| Panalane® L14E | 82 | Hydrogenated Polyisobuten |
| Polysynlan® | 97 | Hydrogenated Polyisobuten |
| DC® 245 fluid | 109 | Cyclopentasiloxane |
| Finsolv® TN | 109 | $C_{12\text{-}15}$ Alkylbenzoate |
| Fitoderm® | 111 | Squalane |
| IPP | 111 | Isopropylpalmitate |
| IPM | 113 | Isopropylmyristate |
| Cetiol' CC | 113 | Dicaprylyl Carbonate |
| Creasil® ISO 20 | 122 | Hydrogenated Polyisobuten |
| Sophim' MC30 | 127 | Hydrogenated Polyisobuten |
| Permethyl® 101A | 134 | Isohexadecane |
| Isohexadecane | 152 | Isohexadecane |
| Erfindungsgemäßes Isoalkangemisch aus Beispiel 2 | 156 |  |

**III. Anwendungsbeispiele**

**a) Zementäre Fliesenkleber1:**

Gew.-Teile
350,0 CEM I 42,5 R Milke®
402,0 Quarzsand F 34 (0,063 - 0,4 mm)
144,0 Quarzsand F 36 (<0,063 - 0,355 mm)
40,0 Omyacarb® 40
4,0 Walocel® MW 40.000 PFV
10,0 Calciumformiat
50,0 Acronal® S 695 P
1000,0 Summe

**b) Zementärer Fliesenkleber2:**

Gew.-Teile
417,0 CEM I 32,5 R

152,0 Quarzsand F 34 (0,063 - 0,4 mm)
386,0 Millisil® W 4
25,0 Microsilica® 940 UH
4,0 Walocel® MT 20000 PV
1,0 Luviskol® K 30
15,0 Acronal® S 629 P
1000,0 Summe

**c) Reperaturmörtel:**

Gew.-Teile
218,0 Quarzsand 0,063 - 0,4 mm
170,0 Quarzsand 0,15 - 0,6 mm
218,0 Quarzsand 0,5 - 1,25 mm
116,0 Quarzsand 1,5 - 3,0 mm
15,5 Microsilica® 940 UH
219,0 Zement CEM I 42,5 R
10,0 Lumiten® EP 3108
0,9 Tamaol® NH 7519
3,6 Dralon® Faser weiß, halbmatt, dtex 6,7-4 mm
29 Acronal® S 695 P
1000,0 Summe

**d) WDVS-Kleber/Armierungsmörtel:**

Gew.-Teile
370,0 Omyacarb® 130
140,0 Quarzsand 0,15 - 0,6 mm
430,0 Zement CEM I 32,5 R
18,0 Microsilica® 940 UH
2,0 Walocel® MT 20000 PV
10,0 Lumiten® EP 3108
30,0 Acronal® S 695 P
1000,0 Summe

**e) Dichtungsschlämme 1K:**

Gew.-Teile Trockenkomponente
104 Quarzsand® (=< 0,09 mm)
310 Quarzsand® F 36
325 Zement CEM I 52,5 R
10 Calciumformiat
5 Agitan® P 803
246 Acronal® S 430 P
1000 Summe

Mischungsverhältnis:Trockenkomponente / Wasser = ca.100 : 25

**f) Dichtungsschlämme 2K:**

Gew.-Teile
Nasskomponente
185 Acronal® S 456
115 Wasser
2 Agitan® 282
Trockenkomponente
143 Quarzmehl® (=<0,09 mm)
157 Quarzsand® (0,08 - 0,2 mm)
210 Quarzsand® (0,2 - 0,5 mm)
175 Zement CEM I 42,5 R
13 Lumiten® E-P 3108
1000 Summe

Trocken- und Nasskomponente werden im vorgegebenen Verhältnis gut gemischt.

**g) Selbstverlaufende Spachtelmassen:**

Gew.-Teile
320,0 Zement CEM I 32,5 R Märker®
100,0 Tonerdeschmelzzement
320,0 Quarzsand 0,063 - 0,4 mm
200,0 Omyacarb® 5
10,0 Lumiten® EP 3108
2,0 Casein
11,7 Kalkhydrat
3,0 Natriumcarbonat
2,0 Weinsäure
0,3 Lithiumcarbonat
1,0 Tylose® H 300 P
30 Acronal® S 631 P
1000 Summe

**h) Feinspachtel:**

Gew.-Teile
130,0 Quarzsand 0,15 - 0,6 mm
376,0 Millisil® W4
0,5 Walocel® MT 20000 PV
18,0 Microsilica® 940 UH
10,0 Lumiten® EP 3108
417,0 Zement CEM I 32,5 R
48,5 Acronal® S 695 P
1000,0 Summe

**i) Mineralischer Putz:**

Gew.-Teile
91,0 Omyacarb® 5
189,0 Omyacarb® 40
82,0 Omyacarb® 130
83,0 Plastorit® 1
311,0 Carolith® 1000

31,0 Titandioxid Rutil, z. B. Kronos® 2056
2,0 Culminal® MHPC 20000 P
181,0 Weisszement CEM I 42,5
30,0 Acronal® S 695 P
1000,0 Summe

**j) Industrieestrich:**

Gew.-Teile
500,0 Korodur® Hartkornsplitt 0/4 mm
15,0 Quarzsand 0,063 - 0,4 mm
110,0 Quarzsand 0,15 - 0,6 mm
95,0 Quarzsand 0,5 - 1,25 mm
85,0 EFA-Füller® (Elektrofilterasche)
160,0 Zement CEM I 42,5 R
10,0 Lumiten® EP 3108
25,0 Acronal® S 631 P
1000,0 Summe

**Zu Fliesenkleber1 Rezept:**

| Produktbezeichnung | Funktion | Hersteller |
|---|---|---|
| Acronal® | Bindemittel | BASF AG, 67056 Ludwigshafen |
| Walocel | Verdicker | Wolff Cellulosics, 29656 Walsrode |
| Omyacarb | Füllstoff | Omya GmbH, 50968 Köln |
| Calciumformiat | Beschleuniger | Fluka Chemie GmbH, CH-9471 Buchs |
| Milke®Zement | Hydraulisches Bindemittel | Milke®Zement, 59590 Geseke |

**Fliesenkleber2 Rezept:**

| Produktbezeichnung | Funktion | Hersteller |
|---|---|---|
| Acronal® | Bindemittel | BASF AG, 67056 Ludwigshafen |
| Luviskol® | Verarbeitungshilfe | BASF AG, 67056 Ludwigshafen |
| Millisil® | Füllstoff | Quarzwerke GmbH, 50226 Frechen |
| Walocel® | Verdicker | Wolff Cellulosics, 29656 Walsrode |
| Microsilica® | Verarbeitungshilfe | Woermann Bauchemie GmbH, 64293 Darmstadt |

**Reperatur-Mörtel:**

| Produktbezeichnung | Funktion | Hersteller |
|---|---|---|
| Acronal® | Bindemittel | BASF AG, 67056 Ludwigshafen |
| Lumiten® | Entschäumer | BASF AG, 67056 Ludwigshafen |

(fortgesetzt)

| Produktbezeichnung | Funktion | Hersteller |
|---|---|---|
| Tamol® | Wassereinsparung | BASF AG, 67056 Ludwigshafen |
| Dralon® Faser | Armierung | Schwarzwälder Textilwerke, 77773 Schenkenzell |
| Microsilica® | Verarbeitungshilfe | Woermann Bauchemie GmbH, 64293 Darmstadt |

**WDVS-Kleber:**

| Produktbezeichnung | Funktion | Hersteller |
|---|---|---|
| Acronal® | Bindemittel | BASF AG, 67056 Ludwigshafen |
| Lumiten® | Entschäumer | BASF AG, 67056 Ludwigshafen |
| Microsilica® | Verarbeitungshilfe | Woermann Bauchemie GmbH, 64293 Darmstadt |
| Omyacarb® | Füllstoff | Omya GmbH, 50968 Köln |
| Walocel® | Verarbeitungshilfe | Wolff Cellulosics, 29656 Walsrode |

**Dichtungsschlämme 1K:**

| Produktbezeichnung | Funktion | Hersteller |
|---|---|---|
| Acronal® S 430 P | Bindemittel | BASF AG, 67056 Ludwigshafen |
| Agitan® P 803 | Entschäumer | Münzing Chemie GmbH, 74017 Heilbronn |
| Quarzsand F 36 | Füllstoff | Quarzwerke GmbH, 50226 Frechen |

**Dichtungsschlämme 2K:**

| Produktbezeichnung | Funktion | Hersteller |
|---|---|---|
| Acronal® S 456 | Bindemittel | BASF AG, 67056 Ludwigshafen |
| Lumiten® E-P 3108 | Entschäumer | BASF AG, 67056 Ludwigshafen |
| Agitan® 282 | Entschäumer | Münzing Chemie GmbH, 74017 Heilbronn |
| Quarzmehl/sand | Füllstoff | Quarzwerke GmbH, 50226 Frechen |

**Selbstverl. Spachtelmasse:**

| Produktbezeichnung | Funktion | Hersteller |
|---|---|---|
| Acronal® | Bindemittel | BASF AG, 67056 Ludwigshafen |
| Lumiten® | Entschäumer | BASF AG, 67056 Ludwigshafen |
| Omyacarb® | Füllstoff | Omya GmbH, 50944 Köln |
| Märker® Zement | Bindemittel | Märker Zementwerke, 86655 Harburg |

(fortgesetzt)

| Produktbezeichnung | Funktion | Hersteller |
|---|---|---|
| Tonerdeschmelzzement | Bindemittel | Larfarge Tonerdezement GmbH, 47059 Duisburg |
| Tylose® | Verarbeitungshilfe | Clariant GmbH, 65174 Wiesbaden |

**Feinspachtel:**

| Produktbezeichnung | Funktion | Hersteller |
|---|---|---|
| Acronal® | Bindemittel | BASF AG, 67056 Ludwigshafen |
| Lumiten® | Entschäumer | BASF AG, 67056 Ludwigshafen |
| Microsilica® | Verarbeitungshilfe | Woermann Bauchemie GmbH, 64293 Darmstadt |
| Millisil® | Zuschlag | Quarzwerke GmbH, 50226 Frechen |
| Walocel® | Verarbeitungshilfe | Wolff Cellulosics, 29656 Walsrode |

**Mineralischer Putz:**

| Produktbezeichnung | Funktion | Hersteller |
|---|---|---|
| Acronal® | Bindemittel | BASF AG, 67056 Ludwigshafen |
| Culminal® | Verdicker | Herkules GmbH, 40599 Düsseldorf |
| Omyacarb®, Carolith® | Füllstoff | Omya GmbH, 50968 Köln |
| Plastorit® | Füllstoff | Vogel & Prenner Nachf., 65185 Wiesbaden |
| Titandioxid | Pigment | Kronos Titan GmbH, 51307 Leverkusen |

**Industrieestrich:**

| Produktbezeichnung | Funktion | Hersteller |
|---|---|---|
| Acronal® | Bindemittel | BASF AG, 67056 Ludwigshafen |
| Lumiten® | Entschäumer | BASF AG, 67056 Ludwigshafen |
| Korodur® | Zuschlag | Korodur Westphal Hartbeton GmbH &Co, 92224 Amberg |
| EFA-Füller® | Füllstoff | BauMineral GmbH, 45699 Herten |

**Entstaubung von Richtrezepturen**

**1.) Prüfung der Wirksamkeit des Entstaubungsmittels**

Es wurden 200g der Beispielrezeptur (a) für Fliesenkleber als Trockenmischung angesetzt und dann mit Hilfe einer Zerstäuberflasche das Entstaubungsmittel gemäß Beispiel 2, in die Trockenmischung eingetragen, um den Mindestbedarf an Entstaubungsmittel zu ermitteln.
Die Mischung wurde dabei per Hand gemischt und beurteilt. Die Ergebnisse zeigen, dass in dieser Rezeptur bereits ein Gewichtsanteil von ca. 0,25 % an Entstaubungsmittel ausreicht.

**2) Prüfung der Lagerstabilität**

Ca. 100 g der obigen Mischung wurden in einen PE-Beutel gefüllt und dieser verschlossen. Der Beutel wurde dann mit einer handelsüblichen Betonplatte 30x30cm (Gewicht 10 kg) unter Normalbedingung belastet. Auch nach 4 Wochen zeigen sich keine Kompaktierungserscheinungen in der Mischung

Ursache für die hohe Effektivität des Entstaubungsmittels im Vergleich zu marktüblichen Entstaubungsmitteln wie Parafinölen dürfte der "spreading effect" des Mittels sein. Dieser sorgt für eine sehr schnelle und effektive Verteilung des Entstaubungsmittels in der Mischung. Dieser Effekt sorgt sogar für das "Überspringen" der Entstaubungseigenschaften von einer entstaubten Komponente auf die gesamte Formulierung.

**Entstaubung von Marktprodukten**

Die beobachtete hohe Effektivität des Entstaubungsmittels wurde an verschiedenen Marktprodukten getestet. Hierzu wurde eine Probe (200g) der Handelsverpackung entnommen und mit dem Entstaubungspulver gemäß Beispiel 2 versetzt:

| Typ | Entstaubungsmittelbedarf |
|---|---|
| Fliesenkleber Ardex® X77 | 0,25% |
| Kalkzementputz Qick-Mix® Feinputz K13 | 0,8% |
| Spachtelmasse Schomburg® ASO NM 15 | 0,5% |

**Entstaubung von Einzelkomponenten:**

Es wurde eine Probe (200g) mit dem Entstaubungsmittel gemäß Beispiel 2 versetzt und der notwendige Bedarf für eine ausreichende Entstaubung gemessen:

| Komponente | Entstaubungsmittelbedarf |
|---|---|
| Zement CEM® I 32,5 (Heidelberger-Zement) | 0,7% |
| redispergierbares Polymerpulver Acronal®S695P | 0,25% |
| redispergierbares Polymerpulver Acronal®S629P | 0,25% |
| redispergierbares Polymerpulver Acronal®S631 P | 0,25% |
| redispergierbares Polymerpulver Acronal®DS5006x | 0,25% |

Ein Portlandzement CEM I 32,5 von Heidelberger-Zement (Typ "Milke) wurde mit 2 % Entstaubungsmittel versetzt. Die Rieselfähigkeit des Zements leidet nicht darunter. Mit diesem Pulver kann eine Fliesenkleberformulierung (siehe S. 23a im Patent) in der 35 % dieses entstaubten Zements eingesetzt werden, vollständig entstaubt werden.

Quarzsand F34 (0,063 - 0,4 mm Feinheit) wurde ebenfalls mit 2 % Entstaubungsmittel versetzt. Auch damit lässt sich die Fliesenkleberformulierung komplett entstauben.

Nicht hydrophobierte Kieselsäure kann mit einem hohen Anteil an Entstaubungsmittel getränkt werden. Dies führt zu einer Granulierung des sehr leichten Kieselsäurepulvers. 10 g der Kieselsäure Aerosil 300 von Degussa konnten mit 34 g Entstaubungsmittel versetzt werden. Dadurch entsteht ein mehlartiges Pulver. Bei Zugabe von 5,6 g dieses Pulvers konnten 135 g obiger Fliesenkleberformulierung entstaubt werden.

Prüfung des Entstaubungsmitteleinflusses auf die Verblockungseigenschaften von Redispersionspulver:

In diesem Versuch wurde der Einfluss des Entstaubungsmittels auf die Verblockungseigenschaften bei Entstaubung eines Redispersionspulvers (Acronal® S695P) gemessen. Hierzu wurde eine sehr hohe Dosierung des Entstaubungsmittels gemäß Beispiel 2 gewählt (> 3 Gew-%), um die Grenzen abzusätzen:

100 g Polymerpulver wurden mit 3,25 g bzw. 5 g Entstaubungsmittel versetzt. Die Proben wurden in ein 50 ml Glas gefüllt, mit einem Gewicht von 800g beschwert und bei einer Temperatur von 60 °C im Trockenschrank für 24 h bzw. 72 h gelagert. Danach wurde die Kompaktierung der Probe beurteilt. Nach 24 h bzw. 72 h Temperaturlagerung zeigen sich bei der Pulverprobe mit 3,25 g nur leicht erhöhte Kompaktierungserscheinungen gegenüber der unentstaubten Vergleichsprobe.

Beim Zusatz von 5g Entstaubungsmittel zeigt sich bereits ein Übergang zur pastösen Masse, die ggf. für weitere Anwendungsfälle von Interesse sein kann. Für die Kompaktierungsuntersuchung ist diese Probe nicht geeignet.

Einfluss des Entstaubungsmittels auf die Partikelgrößenverteilung

Eine repräsentative Probe 200 g redispergierbares Polymerpulver (Acronal® S695P) wurde mit 2,2 % Entstaubungsmittel versetzt.

Die Partikelverteilung wurde im Vergleich zu einer Probe ohne Entstaubungsmittel über das Coulter-Zählverfahren untersucht.

Nach der Entstaubung liegen im Bereich 0,1 - 5 $\mu$m praktisch keine Teilchen mehr vor. Im Bereich 5 - 10 $\mu$m ist die Teilchenanzahl deutlich reduziert gegenüber der nicht entstaubten Probe.

### Patentansprüche

1. Verwendung von Isoalkangemischen, deren $^1$H-NMR-Spektrum im Bereich einer chemischen Verschiebung $\delta$ von 0,6 bis 1,0 ppm, bezogen auf Tetramethylsilan, ein Flächenintegral von 25 bis 70 %, bezogen auf die Gesamtintegralfläche, aufweist, und die eine kinematische Viskosität, bestimmt bei 40°C nach DIN51562, von 1 bis 9 mm$^2$/sec aufweisen, als Additive zur Entstaubung pulverförmiger bauchemischer Produkte, wobei die Isoalkangemische, bezogen auf ihr Gesamtgewicht, weniger als 95 Gew.-% Alkane desselben Molekulargewichts enthalten.

2. Verwendung von Isoalkangemischen gemäß Anspruch 1, als Additive zur Entstaubung der organischen Bestandteile bauchemischer Produkte.

3. Verwendung von Isoalkangemischen gemäß Anspruch 1, als Additive zur Entstaubung der mineralischen Bestandteile bauchemischer Produkte

4. Verwendung von Isoalkangegmischen nach einem der Ansprüche 1 bis 3, deren $^1$H-NMR-Spektrum im Bereich einer chemischen Verschiebung $\delta$ von 0,6 bis 1,0 ppm ein Flächenintegral von 30 bis 60 %, bevorzugt von 35 bis 55 %, bezogen auf die Gesamtintegralfläche, aufweist.

5. Verwendung von Isoalkangemischen nach einem der Ansprüche 1 bis 4, die einen Verzweigungsgrad V im Bereich von 0,1 bis 0,35, bevorzugt von 0,12 bis 0,3, besonders bevorzugt von 0,15 bis 0,27, insbesondere von 0,17 bis 0,23, aufweisen.

6. Verwendung von Isoalkangemischen nach einem der Ansprüche 1 bis 5, die im wesentlichen keine tert.-Butylgruppen aufweisen.

7. Verwendung von Isoalkangemischen nach einem der Ansprüche 1 bis 6, die wenigstens 70 Gew.-%, bevorzugt wenigstens 85 Gew.-%, insbesondere wenigstens 95 Gew.-%, Alkane mit 8 bis 20 Kohlenstoffatomen enthalten.

8. Verwendung von Isoalkangemischen nach einem der Ansprüche 1 bis 7, erhältlich durch ein Verfahren, bei dem man

   a) ein Kohlenwasserstoffeinsatzmaterial bereitstellt, das wenigstens ein Olefin mit 2 bis 6 Kohlenstoffatomen enthält,
   b) das Kohlenwasserstoffeinsatzmaterial einer Oligomerisierung an einem Übergangsmetall-haltigen Katalysator unterwirft,
   c) das in Schritt b) erhaltene Oligomerisierungsprodukt hydriert.

9. Verwendung eines Isoalkangemisches nach Anspruch 8, wobei man das in Schritt b) erhaltene Oligomerisierungsprodukt und/oder das in Schritt c) erhaltene Hydrierungsprodukt einer Auftrennung unterzieht.

10. Verwendung eines Isoalkangemisches nach einem der Ansprüche 8 oder 9, wobei in Schritt a) ein Kohlenwasserstoffgemisch bereitgestellt wird, das einen Gehalt an linearen Olefinen von mindestens 80 Gew.-%, besonders bevorzugt mindestens 90 Gew.-%, insbesondere mindestens 95 Gew.-%, bezogen auf den Gesamtolefingehalt, aufweist.

11. Verwendung eines Isoalkangemisches nach einem der Ansprüche 8 bis 10, wobei in Schritt a) ein $C_4$-Kohlenwas-

serstoffgemisch bereitgestellt wird.

**12.** Verwendung eines Isoalkangemisches nach einem der Ansprüche 8 bis 11, wobei der in Schritt b) eingesetzte Katalysator ein heterogener, Nickel enthaltender Katalysator ist.

**13.** Verwendung eines Isoalkangemisches nach einem der Ansprüche 1 bis 12, als Träger zum Entstauben weiterer Formulierungskomponenten.

**14.** Redispergierbare Pulver enthaltend wenigstens ein Isoalkangemisch nach einem der Ansprüche 1 bis 12.

**15.** Verwendung von entstaubtem redispergierbarem Pulver gemäß Anspruch 14 als Träger zur Entstaubung pulverförmiger bauchemischer Produkte.

**16.** Pulverförmige bauchemische Produkte enthaltend wenigstens ein Isoalkangemisch, wie in einem der Ansprüche 1 bis 12 definiert, sowie weitere übliche Inhaltsstoffe.

**17.** Verfahren zur Herstellung von pulverförmigen bauchemischen Produkten mit vermindertem Staubbildungsverhalten enthaltend wenigstens ein Isoalakangemisch, wie in einem der Ansprüche 1 bis 12 definiert, durch Beaufschlagung bzw. in Kontakt bringen des Isoalkangemisches mit dem bauchemischen Produkt.

**Claims**

**1.** The use of isoalkane mixtures whose $^1$H-NMR spectrum has an area integral of from 25 to 70%, based on the total integral area, in the range of a chemical shift $\delta$ of from 0.6 to 1.0 ppm, based on tetramethylsilane, and which have a kinematic viscosity, determined at 40°C to DIN51562, of from 1 to 9 mm$^2$/sec, as additives for dedusting pulverulent construction chemistry products, wherein the isoalkane mixtures, based on the total weight thereof, comprise less than 95% by weight of alkanes of the same molecular weight.

**2.** The use of isoalkane mixtures according to claim 1 as additives for dedusting the organic constituents of construction chemistry products.

**3.** The use of isoalkane mixtures according to claim 1 as additives for dedusting the mineral constituents of construction chemistry products.

**4.** The use of isoalkane mixtures according to any of claims 1 to 3, whose $^1$H-NMR spectrum has an area integral of from 30 to 60%, preferably from 35 to 55%, based on the total area integral, in the range of a chemical shift $\delta$ of from 0.6 to 1.0 ppm.

**5.** The use of isoalkane mixtures according to any of claims 1 to 4, which have a degree of branching V in the range of from 0.1 to 0.35, preferably from 0.12 to 0.3, particularly preferably from 0.15 to 0.27, in particular from 0.17 to 0.23.

**6.** The use of isoalkane mixtures according to any of claims 1 to 5, which have substantially no tert-butyl groups.

**7.** The use of isoalkane mixtures according to any of claims 1 to 6, which comprise at least 70% by weight, preferably at least 85% by weight, in particular at least 95% by weight, of alkanes having 8 to 20 carbon atoms.

**8.** The use of isoalkane mixtures according to any of claims 1 to 7, obtainable by a process in which

a) a hydrocarbon starting material which comprises at least one olefin having 2 to 6 carbon atoms is provided,
b) the hydrocarbon starting material is subjected to an oligomerization over a transition metal-containing catalyst,
c) the oligomerization product obtained in step b) is hydrogenated.

**9.** The use of an isoalkane mixture according to claim 8, the oligomerization product obtained in step b) and/or the hydrogenation product obtained in step c) being subjected to a separation.

**10.** The use of an isoalkane mixture according to either of claims 8 and 9, a hydrocarbon mixture which has a content of at least 80% by weight, particularly preferably at least 90% by weight, in particular at least 95% by weight, based on the total olefin content, of linear olefins being provided in step a).

11. The use of an isoalkane mixture according to any of claims 8 to 10, a $C_4$-hydrocarbon mixture being provided in step a).

12. The use of an isoalkane mixture according to any of claims 8 to 11, the catalyst used in step b) being a heterogeneous catalyst comprising nickel.

13. The use of an isoalkane mixture according to any of claims 1 to 12 as a carrier for dedusting further formulation components.

14. A redispersible powder comprising at least one isoalkane mixture according to any of claims 1 to 12.

15. The use of a dedusted redispersible powder according to claim 14 as a carrier for dedusting pulverulent construction chemistry products.

16. A pulverulent construction chemistry product comprising at least one isoalkane mixture as defined in any of claims 1 to 12 and further customary ingredients.

17. A process for the preparation of pulverulent construction chemistry products having reduced dust formation behavior, comprising at least one isoalkane mixture as defined in any of claims 1 to 12, by treating the isoalkane mixture or bringing it into contact with the construction chemistry product.

**Revendications**

1. Utilisation de mélanges d'isoalcanes, dont le spectre de RMN-$^1$H présente dans l'intervalle d'un déplacement chimique $\delta$ de 0,6 à 1,0 ppm, par rapport au tétraméthylsilane, une intégrale de surface de 25 à 70 %, par rapport à la surface d'intégrale totale, et qui ont une viscosité cinématique, déterminée à 40°C selon DIN51562, de 1 à 9 mm$^2$/sec, en tant qu'additifs pour le dépoussiérage de produits chimiques pulvérulents pour le bâtiment, les mélanges d'isoalcanes, par rapport au poids total de ceux-ci, comprenant moins de 95% en poids d'alcanes de la même masse moléculaire.

2. Utilisation de mélanges d'isoalcanes selon la revendication 1, en tant qu'additifs pour le dépoussiérage des composants organiques de produits chimiques pour le bâtiment.

3. Utilisation de mélanges d'isoalcanes selon la revendication 1, en tant qu'additifs pour le dépoussiérage des composants minéraux de produits chimiques pour le bâtiment.

4. Utilisation de mélanges d'isoalcanes selon l'une quelconque des revendications 1 à 3, dont le spectre de RMN-$^1$H présente dans l'intervalle d'un déplacement chimique $\delta$ de 0,6 à 1,0 ppm une intégrale de surface de 30 à 60 %, de préférence de 35 à 55 %, par rapport à la surface d'intégrale totale.

5. Utilisation de mélanges d'isoalcanes selon l'une quelconque des revendications 1 à 4, qui présentent un degré de ramification V dans la plage de 0,1 à 0,35, de préférence de 0,12 à 0,3, de façon particulièrement préférée de 0,15 à 0,27, en particulier de 0,17 à 0,23.

6. Utilisation de mélanges d'isoalcanes selon l'une quelconque des revendications 1 à 5, qui ne comportent pratiquement pas de groupes tert-butyle.

7. Utilisation de mélanges d'isoalcanes selon l'une quelconque des revendications 1 à 6, qui contiennent au moins 70 % en poids, de préférence au moins 85 % en poids, en particulier au moins 95 % en poids d'alcanes ayant de 8 à 20 atomes de carbone.

8. Utilisation de mélanges d'isoalcanes selon l'une quelconque des revendications 1 à 7, pouvant être obtenus par un procédé dans lequel

a) on dispose d'un produit de départ hydrocarboné qui contient au moins une oléfine ayant de 2 à 6 atomes de carbone,

b) on soumet le produit de départ hydrocarboné à une oligomérisation sur un catalyseur contenant un métal de transition,
c) on soumet à une hydrogénation le produit d'oligomérisation obtenu dans l'étape b).

**9.** Utilisation d'un mélange d'isoalcanes selon la revendication 8, dans laquelle on soumet à un fractionnement le produit d'oligomérisation obtenu dans l'étape b) et/ou le produit d'hydrogénation obtenu dans l'étape c).

**10.** Utilisation d'un mélange d'isoalcanes selon la revendication 8 ou 9, dans laquelle on dispose dans l'étape a) un mélange d'hydrocarbures qui présente une teneur en oléfines linaires d'au moins 80 % en poids, de façon particulièrement préférée d'au moins 90 % en poids, en particulier d'au moins 95 % en poids, par rapport à la teneur totale en oléfines.

**11.** Utilisation d'un mélange d'isoalcanes selon l'une quelconque des revendications 8 à 10 dans laquelle on dispose dans l'étape a) un mélange d'hydrocarbures en $C_4$.

**12.** Utilisation d'un mélange d'isoalcanes selon l'une quelconque des revendications 8 à 11, dans laquelle le catalyseur utilisé dans l'étape b) est un catalyseur hétérogène contenant du nickel.

**13.** Utilisation d'un mélange d'isoalcanes selon l'une quelconque des revendications 1 à 12, en tant que support pour le dépoussiérage d'autres composants d'une composition.

**14.** Poudres redispersables contenant au moins un mélange d'isoalcanes selon l'une quelconque des revendications 1 à 12.

**15.** Utilisation d'une poudre redispersable dépoussiérée selon la revendication 14, en tant que support pour le dépoussiérage de produits chimiques pulvérulents pour le bâtiment.

**16.** Produits chimiques pulvérulents pour le bâtiment, contenant au moins un mélange d'isoalcanes tel que défini dans l'une quelconque des revendications 1 à 12, ainsi que d'autres constituants usuels.

**17.** Procédé pour la préparation de produits chimiques pulvérulents pour le bâtiment, à comportement réduit de formation de poussière, contenant au moins un mélange d'isoalcanes tel que défini dans l'une quelconque des revendications 1 à 12, par application ou mise en contact du mélange d'isoalcanes sur ou avec le produit chimique pour le bâtiment.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4339713 A
- WO 9514647 A
- WO 9925668 A
- WO 0059849 A
- WO 0053546 A
- WO 0172670 A
- EP 1457475 A
- US 4780143 A
- EP 403874 A
- WO 2006084588 A
- DE 102004018753 A1
- DE 102004018753
- EP 81041 A
- DE 1568542
- DE 19957173 A
- US 3597489 A
- US 2898387 A
- GB 799396 A
- GB 1155539 A
- US 3202723 A
- SU 319582
- US 3917540 A
- US 3244644 A
- DE 19642770 A
- DE 10128242 A
- EP 0668257 A

**In der Beschreibung aufgeführte Nicht-Patentliteratur**

- **K. WEISSERMEL ; H.-J. ARPE.** Industrielle organische Chemie. VCH-Verlagsgesellschaft, 1994, 76-81
- *Catalysis Today,* 1990, vol. 6, 329
- Organikum. VEB Deutscher Verlag, 1988, 288